# EUROPEAN PATENT APPLICATION

(11) **EP 0 832 559 A2**
(43) Date of publication of application: **01.04.1998**
(21) Application number: 97114941.4
(22) Date of filing: 28.08.1997
(51) Int. Cl.: A01K 87/00

(54) **Telescopic type interline fishing rod**

(30) Priority: 28.08.1996 JP 245738/96; 14.03.1997 JP 82262/97; 21.03.1997 JP 87498/97; 16.05.1997 JP 143021/97
(71) Applicant: DAIWA SEIKO INC., Higashikurume-shi, Tokyo (JP)
(72) Inventor: Akiba, Masaru, Tokorozawa-shi, Saitama (JP); Tsurufuji, Tomoyoshi, Sayama-shi, Saitama (JP); Hashimoto, Yasushi, Hachiouji-shi, Tokyo (JP); Matsui, Seiji, Higashikurume-shi, Tokyo (JP); Ito, Koichi, Higashikurume-shi, Tokyo (JP)
(74) Representative: Grünecker, Kinkeldey, Stockmair & Schwanhäusser Anwaltssozietät

(57) **Abstract**

A telescopic type interline fishing rod capable of reeling up a fishing line by a reel even if front rod sections are accommodated in a state where the inserted fishing line is kept intact. Plugs 12S, 14 and 16S each having a guide ring is attached to the rear end of each of a plurality of small-diameter rod sections 12, 14 and 16 which can telescopically be accommodated in a large-diameter rod section 10 having a fishing-line introducing section 20. Stoppers 12K, 14K and 16K are provided on the small-diameter rod sections for limiting movement of rod sections during the accommodation operation to create lengthwise clearance spaces.

## Description

### BACKGROUND OF THE INVENTION

The present invention relates to a telescopic type interline fishing rod in which rod sections can be accommodated in a telescopic manner with the inserted fishing line kept intact.

Since an interline fishing rod requires a great labor to insert a fishing line, small-diameter rod sections are usually accommodated in such a manner that the inserted fishing line is kept intact. On the other hand, to prevent enlargement of the resistance of the fishing line because of contact of the same with the inner surface of the rod, fishing line guides are usually disposed along the inner surface of the rod.

However, when the front rod section is accommodated in the rear rod section in a telescopic manner and in a state where the fishing line is inserted, the fishing line is loosened and, thus, a portion of the fishing line is introduced into a space between the front rod section and the rear rod section. In this case, the fishing line is undesirably held between the front rod section and the fishing line guide on the inner surface of the rear rod section, or the fishing line is undesirably wound around the front rod section. If the fishing line is wound around the rod section or held between the rod section and the fishing line guide, the loosen portion of the fishing line cannot easily be reeled up by a reel. Further, the rearward movement of the front rod section into the rear rod section is likely to result in a damage on the fishing line which is accidentally held between the front rod section and the fishing line guide of the rear rod section.

Furthermore, although the fishing line guides inside the rod can reduce the resistance of the fishing line, the existence of the fishing line guide frequently hinders an operation for inserting the fishing line prior to fishing. That is, the leading end of a line inserting tool comes in contact with the fishing line guides disposed during the insertion operation and thus the insertion operation is hindered. In addition, enlargement of the weight attributable to existence of the fishing line guide must be reduced as much as possible.

Moreover, the interline fishing rod is required to easily and quickly adjust the length of the fishing rod depending on the varying fishing condition during the fishing operation, and to reduce the resistance of the fishing line even after the length has been adjusted.

### SUMMARY OF THE INVENTION

Accordingly, an object of the present invention is to provide an interline fishing rod capable of easily reeling a fishing line up by a reel even if the rod sections are accommodated in a state where the fishing line is inserted.

Another object of the present invention is to provide an interline fishing rod capable of protecting the fishing line from being damaged even if the front or small-diameter rod sections are accommodated in a state where the inserted fishing line is kept intact.

Another object of the present invention is to provide an interline fishing rod facilitating the quick fishing-line insertion operation.

Another object of the present invention is to provide an interline fishing rod enabling quick length adjustment while reducing resistance of the fishing line.

In view of the foregoing, the present invention provides, as an embodiment, an interline fishing rod comprising: a plug having a guide ring disposed along the inner surface thereof and attached to the rear end of each of a plurality of small-diameter rod sections which can telescopically be accommodated in a large-diameter rod section having a fishing-line introducing section; and a stopper of each of the small-diameter rod sections for limiting accommodation into a rear rod section which directly accommodates a front rod section, wherein a lengthwise clearance space having a length of about 10 mm or longer is formed between the rear end of the plug of the accommodated front rod section and the front end of the plug of the rear rod section.

Since the plug is attached to the rear end of the front rod section, the loosen fishing line can be pushed downwards when the front rod section is moved rearwards so as to be accommodated. Moreover, the stopper functions to create the clearance space having a length of about 10 mm or longer in the lengthwise direction between the rear end of the plug of the front rod section and the front end of the plug of the rear rod section. Therefore, the loosen fishing line can be kept in the above-mentioned space. Thus, introduction of the fishing line into the space between the outer surface of the front rod section and the inner surface of the rear rod section and thus winding of the fishing line around the front rod can be prevented.

The present invention provides, as another embodiment, an interline fishing rod comprising: fishing line guides disposed on the inner surface of a large-diameter fishing rod section; and a plurality of grooves which are formed in the rear end portion of each small-diameter rod section which is directly accommodated in the large-diameter fishing rod section, which are formed substantially in the lengthwise direction of the rod section, which reach the rear end and each of which has a bottom surface, wherein the depth and width of each groove is larger than the diameter of a standard fishing line.

In addition to the above-mentioned structure, it is preferable that the width of the top portion of the wall portion between grooves is made to be not larger than the diameter of a standard fishing line. In this case, the width of the top portion is a width of a highest portion (a top portion) from the groove. For example, the width is the length of the upper side (the top side) in a case of the wall portion having a trapezoidal horizontal cross sectional shape. In a case of a wall portion having a triangular or circular arc cross sectional shape, no substantial width exists.

The grooves each having the width and the depth larger than the diameter of the fishing line and formed in the lengthwise direction to reach the rear end of the small-diameter rod section is able to accommodate the fishing line so that the fishing line is not held between the peripheral portion of the rear end of the small-diameter rod section and the fishing line guide. Since the groove has the bottom surface, the fishing line accommodated as described above is, different from the structure having a slit, not entangled around the rear end of the small-diameter rod section.

When the width of the top portion of the wall portion between the grooves is made to be not larger than the diameter of the fishing line, the fishing line falls in the groove even if the fishing line is attempted to be held between the top portion and the fishing line guide. Therefore, damage can be prevented.

The present invention provides, as another embodiment, an interline fishing rod comprising a major rod section having a reel fixing portion, wherein the length of an intermediate rod section which is telescopically joined to the major rod section is longer than the length of the major rod section, the intermediate rod section is provided with a fishing-line introducing section for introducing a fishing line, the intermediate rod section can be accommodated to a position near the rear end of the major rod section, in a state where the intermediate rod section has been accommodated to a position near the rear end, the fishing-line introducing section projects from the major rod section and the fishing-line introducing section is positioned in an intermediate region except for about 30 % of the front and rear portions of the overall length of the accommodated fishing rod, and the overall length of the accommodated fishing rod is about 130 cm or smaller.

The present invention provides, as another embodiment, an interline fishing rod comprising a major rod section having a reel fixing portion, wherein the length of an intermediate rod section which is telescopically joined to the major rod section is longer than the length of the major rod section, the intermediate rod section is provided with a fishing-line introducing section for introducing a fishing line, the intermediate rod section can be accommodated to a position near the rear end of the major rod section, the fishing-line introducing section projects from the major rod section in a state where the intermediate rod section has been accommodated to a position near the rear end, and the distance from the reel fixing portion to the front end of the major rod section is shorter than the distance from the front end of the major rod section to the fishing-line introducing section.

A portion in the vicinity of the fishing-line introducing section is held to insert the fishing line through the fishing-line introducing section. Since the fishing-line introducing section is positioned in the intermediate region except for about 30 % of the front and rear portions of the rod section in a state where the fishing rod has been accommodated, the balance of the fishing rod can be kept when the fishing rod is held and thus the insertion operation can easily be performed. Since the overall length in the accommodated state is 130 cm or shorter, the intermediate rod section can be pulled out at a stretch to the position at which the rear end of the rod is positioned near the fishing-line introducing section by holding the portion in the vicinity of the fishing-line introducing section by the hand and by holding the leading end portion of the rod section accommodated in the intermediate rod section having the fishing-line introducing section by the other hand without a necessity of changing the hands which must hold the rod sections. Thus, a state where the fishing line can be inserted can significantly easily be realized.

If the fishing-line introducing section is of a type having the inside portion which can be observed, the operation for pulling out the rod section can be performed by causing the hand holding the portion in the vicinity of the fishing-line introducing section to approach the eyes to look the rod section through the fishing-line introducing section. Thus, the operation can further quickly be performed.

Fishing is sometimes performed in a state where the intermediate rod section having the fishing-line introducing section has been accommodated in the major rod section dependent on the condition of the fishing spot. Also in this case, it is preferable that the distance from the reel fixing portion to the fishing-line introducing section is elongated to reduce the angle at which the length is introduced to reduce the resistance of the fishing line. If the terminal fish hooking device is caught during fishing in the state where the length has been shortened, the fishing rod is sometimes required to be elongated. In this case, it is preferable that the rod can quickly be elongated in the fishing state. If the distance from the reel fixing portion to the fishing-line introducing section is a predetermined distance when the angle at which the fishing line is introduced is considered, it is preferable that a structure be employed in which the rod sections can be pulled out as long as possible when the rod sections are pulled out if necessary. Therefore, the distance from the reel fixing portion to the front end of the major rod section is shorter than the distance from the front end of the major rod section to the fishing-line introducing section. When the intermediate rod section is pulled out in a fishing state, the hand holding the reel fixing portion of the major rod section is kept intact and the intermediate rod section in the region in front of the front end of the major rod section is held by the other hand to pull out the rod section so that the rod is elongated. Since the span of the fisherman is constant, the length which can be pulled out at a stretch can be elongated in inverse proportion to the distance from the reel fixing portion to the front end of the major rod section. Thus, the degree of freedom of pulling out can be extended.

The present invention provides, as another embodiment, an interline fishing rod comprising a large-diameter rod section having a fishing-line introducing section, small-diameter rod sections which can directly be joined to the large-diameter rod section and at least a tip rod section, wherein the rod sections following the small-diameter rod section respectively are formed into a telescopic structure, the rod sections following the small-diameter rod section except for the tip rod include a plurality of fishing line guides projecting inwardly, the rear end portion of the small-diameter rod section can be disposed adjacent to the fishing-line introducing section of the large-diameter rod section, in a case where the telescopic rod sections are accommodated mutually, a relationship with the rear rod section to which each rod section is directly joined is established in which no fishing line guide exists in the rear of the rear end of each of the accommodated rod sections except for the fishing line guide provided on a plug of the rear rod, and a plurality of fishing line guides are disposed also in the tip rod section, and at least either the angle of the surface of a rear portion of a major portion of the fishing line guides in the tip rod which is inclined forwards with respect to the inner surface of the rod section or the angle of the surface of the front portion inclined rearwards is smaller than the angle of inclination of each of the major portion of the fishing line guides of the rod except for the tip rod.

The rods following the small-diameter rod section include the small-diameter rod section and are all of rod sections positioned in front of the small-diameter rod section when the rods are joint up.

The meaning of the plurality fishing line guides includes a continuous spiral fishing line guide. In this case, one round is counted as one fishing line guide.

The plurality fishing line guides of the rod sections except for the tip rod section do not include the fishing line guides provided on the plugs of the rod sections.

When the telescopic rod sections are accommodated in the case where the angle of the surface of a rear portion of a major portion of the fishing line guides in the tip rod section which is inclined forwards with respect to the inner surface of the rod section is smaller than the angle of inclination of each of the major portion of the fishing line guides of the rod section except for the tip rod section with respect to the inner surface of the rod section, the relationship with each rear rod section is established in which no fishing line guide exists in the rear portion except for the fishing line guide of the plug, and the rear end of the small-diameter rod section can be positioned near the fishing-line introducing section. Therefore, when the fishing line is inserted from the fishing-line introducing section, the leading end of the inserting tool can easily be allowed to reach the inside portion of the rear end portion of the tip rod section by allowing the inserting tool to pass through the fishing line guide provided on the plug of each of rod sections following the small-diameter rod section. Since the angle of the surface of a rear portion of a major portion of the fishing line guides in the tip rod which is inclined forwards with respect to the inner surface of the rod is smaller than the angle of inclination of each of the major portion of the fishing line guides of the rod section except for the tip rod section with respect to the inner surface of the rod, the fishing line introducing tool can furthermore easily be inserted from the rear end of the tip rod section to the leading end. Since the rod section having the plural fishing line guides is included in the rod sections following the small-diameter rod section, the fishing line can satisfactorily be guided in the fishing operation. In addition, the fishing line guides of the rod section having the plural fishing line guides have the large angle of inclination as compared with that of the fishing line guide in the tip rod section, that is, the width of the peripheral portion is (relatively) reduced when a comparison is performed between the guides having the same height. Therefore, enlargement of the guide attributable to the fishing line guides can be reduced as much as possible.

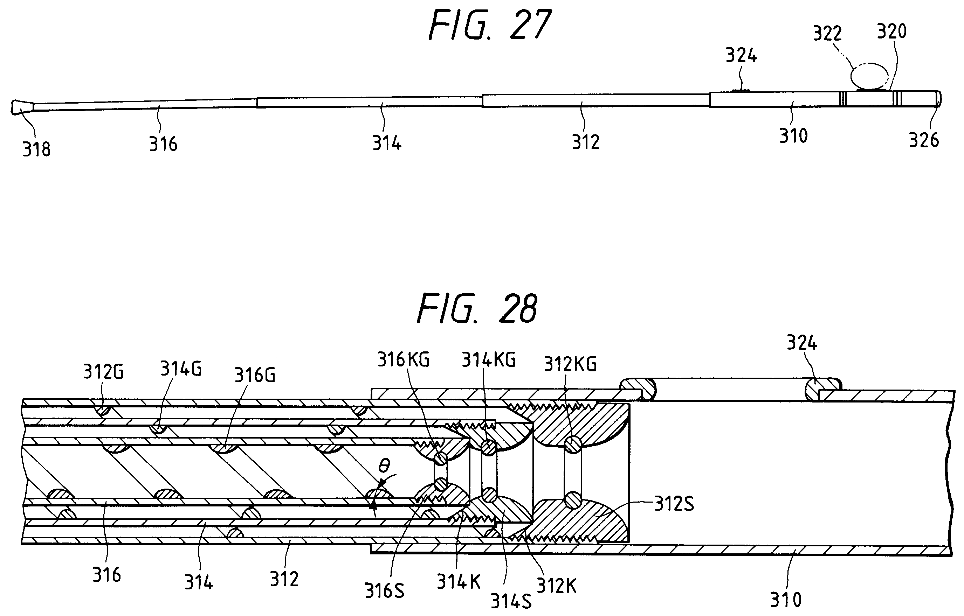

In the case where the angle of the surface of a rear portion of a major portion of the fishing line guides in the tip rod section which is inclined rearwards with respect to the inner surface of the rod section is smaller than the angle of inclination of each of the major portion of the fishing line guides of the rod except for the tip rod section with respect to the inner surface of the rod section, the operation for inserting the fishing line from the leading end of the tip rod section can easily be performed to the rear end of the tip rod section. Then, the fishing line is inserted into the fishing line guide of the plug provided on each rod section so that the fishing line is inserted to a position near the fishing-line introducing section. Therefore, the fishing line can significantly easily be inserted. When the fishing line introducing tool is pulled out to the outside of the fishing-line introducing section, a hooking member can easily be inserted if the introduced is formed into an opened shape as shown in, for example, Fig. 28. Thus, the fishing line introducing tool can be pulled out from outside or the leading end can automatically be discharged to the outside attributable to the weight of the leading end of the fishing line introducing tool when the introduced is faced downwards. In either case, the fishing line can significantly be inserted, the fishing line can easily be guided in the fishing operation and enlargement of the weight attributable to the fishing line guides can be prevented as much as possible.

### BRIEF DESCRIPTION OF THE DRAWINGS

Fig. 1 is a vertical cross sectional view showing an interline fishing rod according to the present invention.

Fig. 2 is a vertical cross sectional view showing an essential portion of an interline fishing rod according to another embodiment.

Fig. 3 is a vertical cross sectional view showing an essential portion of an interline fishing rod according to another embodiment.

Fig. 4 is a vertical cross sectional view showing an essential portion of an interline fishing rod according to another embodiment.

Figs. 5(a), 5(b) and 5(c) are diagrams, each showing a shape of a fishing line guide used in an interline fishing rod of the invention.

Fig. 6 is a vertical cross sectional view showing an essential portion of an interline fishing rod according to another embodiment.

Fig. 7 is a vertical cross sectional view showing an essential portion of an interline fishing rod according to another embodiment.

Fig. 8 is a vertical cross sectional view showing an essential portion of an interline fishing rod according to another embodiment.

Fig. 9 is a vertical cross sectional view showing an essential portion of an interline fishing rod according to another embodiment.

Fig. 10 is a vertical cross sectional view showing an essential portion of an interline fishing rod according to another embodiment.

Fig. 11 is a vertical cross sectional view showing an essential portion of an interline fishing rod according to another embodiment.

Fig. 12 is a vertical cross sectional view showing an essential portion of an interline fishing rod according to another embodiment.

Fig. 13 is a vertical cross sectional view showing an essential portion of an interline fishing rod according to another embodiment.

Fig. 14 is a vertical cross sectional view showing an essential portion of an interline fishing rod according to another embodiment.

Fig. 15 is a vertical cross sectional view showing an essential portion of an interline fishing rod according to another embodiment.

Fig. 16 is a vertical cross sectional view showing an essential portion of an interline fishing rod according to another embodiment.

Fig. 17 is a vertical cross sectional view showing an interline fishing rod according to another embodiment.

Fig. 18 is an enlarged view showing an end cap of a small-diameter rod shown in Fig. 17 when the end cap is viewed from a rear position.

Fig. 19 is a diagram showing another contrivance.

Fig. 20 is a diagram showing another contrivance.

Fig. 21 is a diagram showing another contrivance.

Fig. 22 is a vertical cross sectional shape showing another embodiment of the interline fishing rod according to the present invention.

Fig. 23 is a diagram showing a state where an interline fishing rod according to another embodiment has been accommodated.

Figs. 24(a) and 24(b) are diagrams respectively showing a state where a first intermediate rod has been accommodated in the interline fishing rod according to another embodiment and a diagram showing where the same has been pulled out.

Fig. 25 is a diagram showing a state where the interline fishing rod has been accommodated.

Fig. 26 is a diagram showing a state where the interline fishing rod shown in Fig. 25 has been fully extended.

Fig. 27 is an overall view showing an interline fishing rod according to another embodiment.

Fig. 28 is a vertical cross sectional view showing an essential portion of the fishing rod shown in Fig. 27 in a state where preparation for fishing is being performed.

Figs. 29(a), 29(b), 29(c) and 29(d) are cross sectional views each showing a fishing line guide for the rod shown in Fig. 27.

Fig. 30 is a cross sectional view showing the heat radiating structure of the fishing line guide.

Fig. 31 is a diagram showing the fishing line guide.

### DETAILED DESCRIPTION OF THE PREFERRED EMBODIMENTS

The present invention will now be described in detail with reference to the embodiments shown in the accompanying drawings.

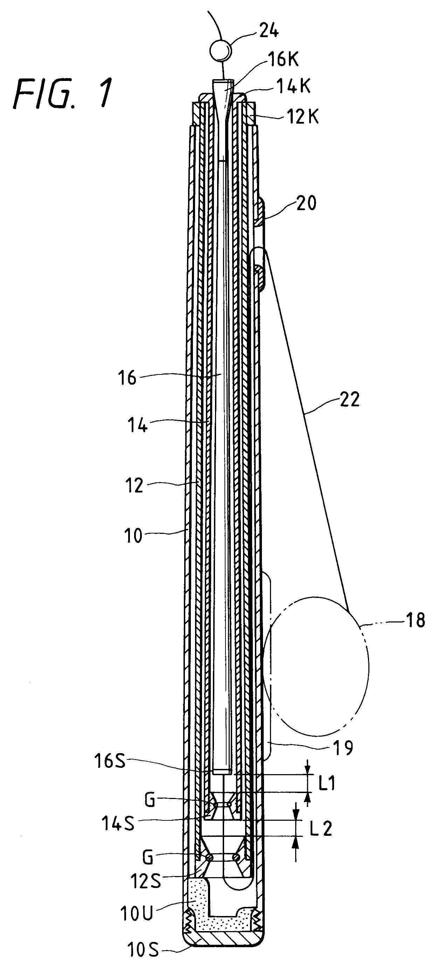

Fig. 1 is a vertical cross sectional view showing an interline fishing rod according to the present invention in a state where rod sections are accommodated. A reel 18 is attached by a reel mounting unit 19 to the main rod section 10 which has a relatively large diameter. Moreover, a hard fishing-line introduction guide 20 having an elongated opening to serve as the fishing-line introduction section and made of ceramics or the like is disposed in the front portion near the front end of the main rod section. Since the fishing-line introduction guide is designed to be substantially flush with the inner wall surface of the major rod section, a first intermediate rod section 12 which is directly joined to the major rod section can be accommodated into the major rod section rearwardly beyond the fishing-line introduction guide 20.

In addition to the first intermediate rod section 12, a second intermediate rod section 14 and a tip rod section 16 are provided, which respectively have relatively small diameters. These small-diameter rod sections are telescopically joined and accommodated as shown in Fig. 1. A top guide 16K serving as a detachable stopper is attached to the leading end of the tip rod section 16. The top guide is abutted against and caught by the leading end of the second intermediate rod section 14 in a hanging manner. A stopper 14K is detachably attached to the outer surface of the leading end of the second intermediate rod section 14. Moreover, also a stopper 12K is detachably attached to the outer surface of the leading end of the first intermediate rod section 12.

A plug 12S, to which a hard guide ring G having a small diameter is attached to the inner surface thereof, is detachably attached to the rear end of the first intermediate rod section 12. A plug 14S, to which a hard guide ring G having a small diameter is attached to the inner surface thereof, is detachably attached to the rear end of the first intermediate rod section 14. A plug 16S, to which a hard guide ring G having a small diameter is attached to the inner surface thereof, is detachably attached to the rear end of the tip rod section 16. Moreover, an end plug 10S is detachably attached to the rear end of the main rod section 10. A cushion member 10U is attached on the inside of the end plug 10S. The cushion member is greatly cut at a circumferential position where the fishing-line introduction guide 20 is located on the main rod section 10 so that a contrivance is employed in which the fishing line drawn out from the plug 12S at the rear end of the first intermediate rod section 12 is introduced into a space defined by the cut portion of the cushion member 10U and thus the fishing line is not held here. That is, the direction of the fishing line can be changed to the fishing-line introduction guide 20. As a result of the above-mentioned contrivance, the stopper 12K disposed at the leading end of the first intermediate rod section 12 may be omitted from the structure.

As described above, each small-diameter rod section has, at the leading end thereof, the stopper serving as a limiting member for limiting the position at which the front rod section is accommodated in the rear rod section. When the rod sections are accommodated, the rear end of the plug 16S of the tip rod section 16 and the front end of the plug 14S of the second intermediate rod section 14 are apart from each other. It is preferable that distance L1 be about 10 mm or longer. Also it is preferable that distance L2 from the rear end of the plug 14S of the second intermediate rod section 14 to the front end of the plug 12S of the first intermediate rod section 12 be about 10 mm or longer. Since the plug is disposed at the rear end of each of the small-diameter rod sections 16, 14 and 12, the loosen fishing line can be pushed rearwards when each of the small-diameter rod sections is accommodated. Since the pushed fishing line can be accommodated in the space formed attributable to the above-mentioned distance, the fishing line is not entangled around the outer surface of the front rod section accommodated in the rear rod section. Therefore, the fishing line 22 can easily be reeled up by the reel 18 after the rods have been accommodated or during the accommodating operation.

Each of the rods of the interline fishing rod is made of fiber reinforced plastic having a matrix made of resin, such as epoxy resin, and reinforced with reinforcing fiber, such as carbon fiber. It applies to the following description.

The following description will be made about a case where the second intermediate rod section 14 is considered as the front rod section to be accommodated, and the first intermediate rod section 12 is considered as the rear rod section for accommodating the rod section. The invention is not limited to this case, and can be applied to the structural relationship between the tip rod section 16 and the second intermediate rod section 14. Although the description will sometimes be directed only to the second intermediate rod section, the description also applies to the other rod sections.

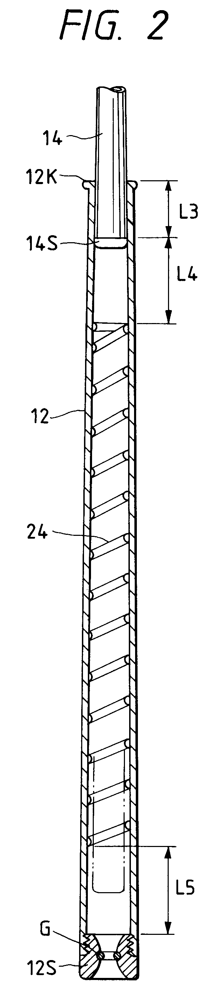

Fig. 2 shows a spiral fishing-line guide 24 disposed in the first intermediate rod section 12. However, no fishing-line guide is disposed in a region L4 just behind a joint region L3 with which the second intermediate rod section 14 is connected, and in a region L5 near the plug 12S. The lengths of the regions L4 and L5 are longer than the pitch of the spiral of the spiral fishing-line guide 24. In a case where a plurality of separate and annular fishing-line guides are disposed in place of the spiral fishing-line guide 24, the lengths of the regions L4 and L5 are made to be longer than the interval of the adjacent guides.

If no fishing-line guide is disposed in the region L5 as described above, no fishing-line guide exists between the outer surface near the rear end of the second intermediate rod section 14 and the inner surface of the first intermediate rod section 12 indicated by a two-dotted chain line when the second intermediate rod section 14 is accommodated. Therefore, a large space is created on the outside of the outer surface of the second intermediate rod section 14, so that the entanglement of the loosen fishing line at this portion can be avoided.

If a fishing-line guide is disposed in the region L4, there is a possibility that the loosen fishing line is held between the fishing-line guide and the second intermediate rod section 14 immediately after the rearward movement of the second intermediate rod section 14disconnected from the joint region L3 has been started in a state where the inserted fishing line is kept intact. Since no fishing-line guide is disposed in the rear region L4, a large space exists in the radial direction. Thus, the risk of the undesirable hitch can be lowered and the entanglement of the fishing line at this portion can be prevented.

Although the neck hanging type stoppers are employed to limit an amount of the accommodation movement of the front rod sections in the first embodiment shown in Fig. 1, another structure may be employed if a predetermined clearance space is secured between plugs. For instance, as a stopper for limiting the amount of the accommodation movement of the front rod section, an arrangement that the plug of the rear rod section receives the front rod section may be applied (see 10U).

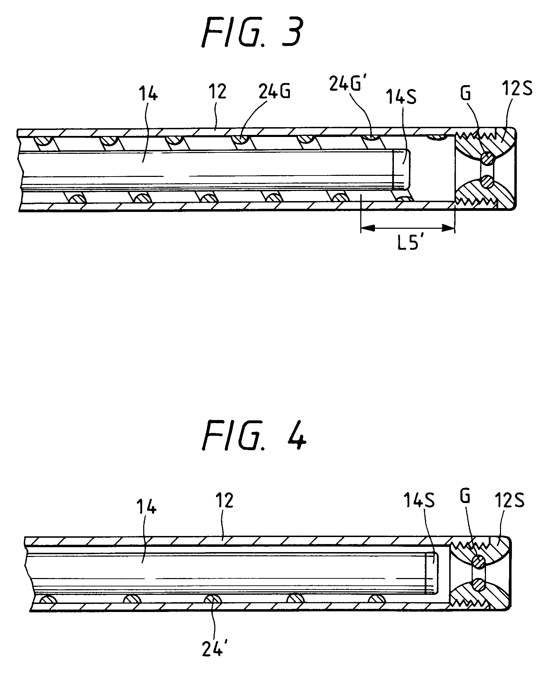

Fig. 3 shows another structure which is different from that shown in Fig. 2 in a point that the height of a spiral fishing-line guide 24G' disposed in a region L5' near the plug 12S of the first intermediate rod section 12 is lower than the height of the spiral fishing-line guide 24G (corresponding to the spiral fishing-line guide 24 shown in Fig. 2) disposed in the front region. Therefore, a large space exists in the radial direction similarly to the structure shown in Fig. 2 so that the risk of the hitch is lowered and tangle of the fishing line is prevented.

### [0015]

Fig. 4 shows a plurality of fishing-line guides 24' disposed on only one side of the inner surface of the first intermediate rod section 12 in the radial direction (for example, each of the fishing-line guide being formed into a semi-annular shape). Thus, a large space is formed in the radial direction by a degree corresponding to the omitted portion of the fishing-line guide. Therefore, the risk of the hitch of the loosen fishing line is lowered and tangle of the fishing line is prevented when the second intermediate rod section 14 is accommodated. If the radial direction of the first intermediate rod section 12 is pre-related to the vertical direction in which the first intermediate rod section 12 is actually used, it is preferable to dispose a semicircular fishing-line guide 24' in the lower portion of the front rod section in the vertical direction. The reason for this is that great contact resistance is generated in the lower portion when the front rod is deflected attributable to a load of the fishing line.

### [0016]

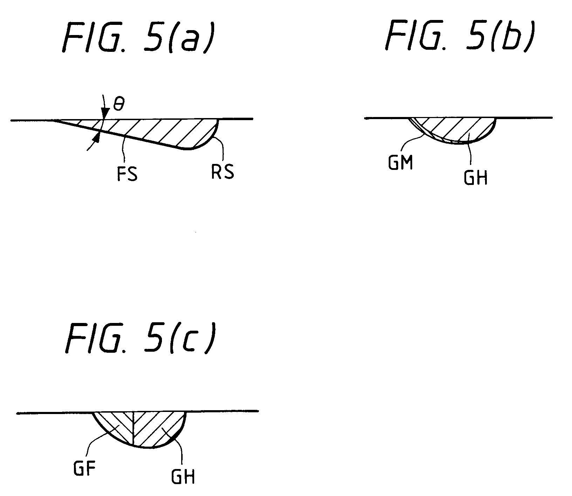

The ideal cross sectional shape of the fishing-line guide provided on the inner surface of the rear rod section, which is suitable for facilitating the accommodation of the front rod section into the rear rod section in a state where the inserted fishing line is kept intact, will now be described with reference to Fig. 5(a) to Fig. 5(c). Note that the left-hand portion of Fig. 5(a) to Fig. 5(c) corresponds to the front portion (or front direction) of the fishing rod without exception. A structure shown in Fig. 5(a) is formed in such a manner that front inner surface FS has an inclination more moderate than the inclination of rear inner surface RS. Therefore, even if the loosen fishing line is attempted to be held between the fishing-line guide and the front rod section when the front rod is accommodated, the fishing line can be moved rearwards along the moderate slope FS. Thus, tangle of the fishing line can be prevented. The inclination angle θ of the front inner surface FS is set to be 45 degrees or smaller. Note that the front inner surface FS is not required to be planar and it may be a moderate curved surface.

### [0017]

A structure shown in Fig. 5(b) is formed such that a coating film GM made of a material capable of satisfactorily sliding the fishing line is formed mainly on the front inner surface of a hard fishing-line guide body GH. Therefore, even if the loosen fishing line is held between the front rod section and the fishing-line guide when the front rod is accommodated, the fishing line can be slid rearwards to prevent tangle of the fishing line. As a matter of course, the coating film may be formed on the overall inner surface of the fishing-line guide body GH as well as the front inner surface of the same. If the material of the coating film for enabling the fishing line to be slid satisfactorily is used to form a layer which cannot be dissolved by water or which cannot easily be dissolved by water, the fishing line can be slid even if it is wetted. A solid lubricating material may be a water repellent material, such as tetrafluoroethylene resin, chlorine trifluoroethylene resin, acrylsilicon resin or carbon fluoride; carbon; molybdenum disulfide; tungsten; tantalum; zirconium; polyethylene; polypropylene; or a mixture of the foregoing material and metal or ceramics. The foregoing material is applied by an applying method, a plating method or an evaporation method or a member prepared by applying the above-mentioned material to a thin sheet member is used.

A structure shown in Fig. 5(c) is formed such that a member GF containing fluorine particles and enabling the fishing line to be slid satisfactorily is disposed in front of the hard fishing-line guide body GH. Therefore, if the loosen fishing line is held between the front rod section and the fishing-line guide when the front rod section is accommodated, the fishing line can be slid rearwards. Thus, tangle of the fishing line can be prevented.

When the fishing-line guide is made of resin, the fishing line is not easily be damaged even if the fishing line is held between the fishing-line guide and the rear end of the front rod section.

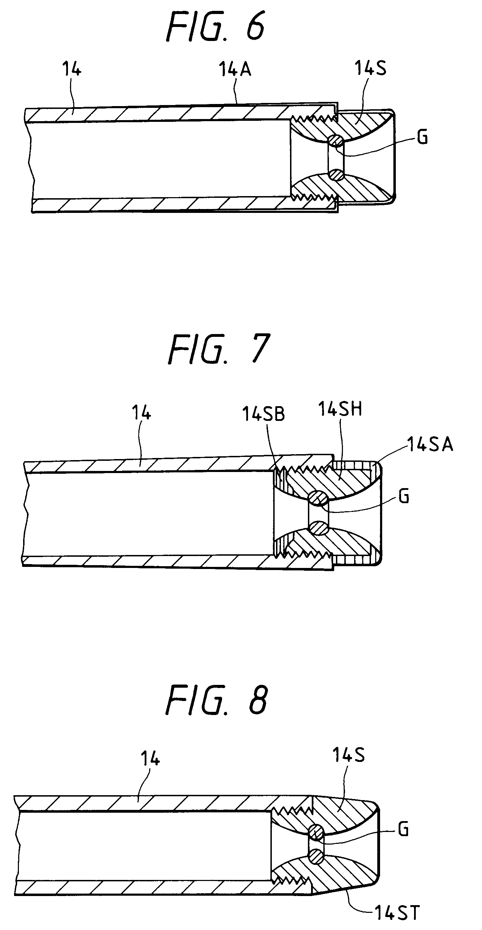

Fig. 6 shows a structure in which a coating film 14A enabling the fishing line to be slid satisfactorily is formed on the outer surface (for example, the joint section or a portion of the same) of the rear end portion of the second intermediate rod section 14 and the outer surface of the plug 14S. Thus, if the fishing line is entangled, the tangle can easily be unraveled or disentangled by simply pulling the fishing line. The material of the coating film may be the material described in connection to the structure shown in Fig. 5(b).

Fig. 7 shows a state in which an element 14SA enabling the fishing line to be slid satisfactorily is secured to the outer surface of a plug body 14SH. Moreover, an element 14SB enabling the fishing line to be slid satisfactorily is secured as well as to the inner surface of the front portion. Even if the fishing line is entangled, it can easily be unraveled because of the elements on the outer surface when the fishing line is pulled. When the fishing line is pulled to unravel the entangled fishing line in the rear end region of the tip rod section 16, the fishing line is generally brought into contact with the outer surface of the element 14SB on the inner surface of the front portion of the plug of the second intermediate rod section 14. In this case, a satisfactory characteristic enabling the fishing line to be slid satisfactorily results in the entangled fishing line being easily be unraveled. The material of each element may be the material described in connection to Fig. 5(b).

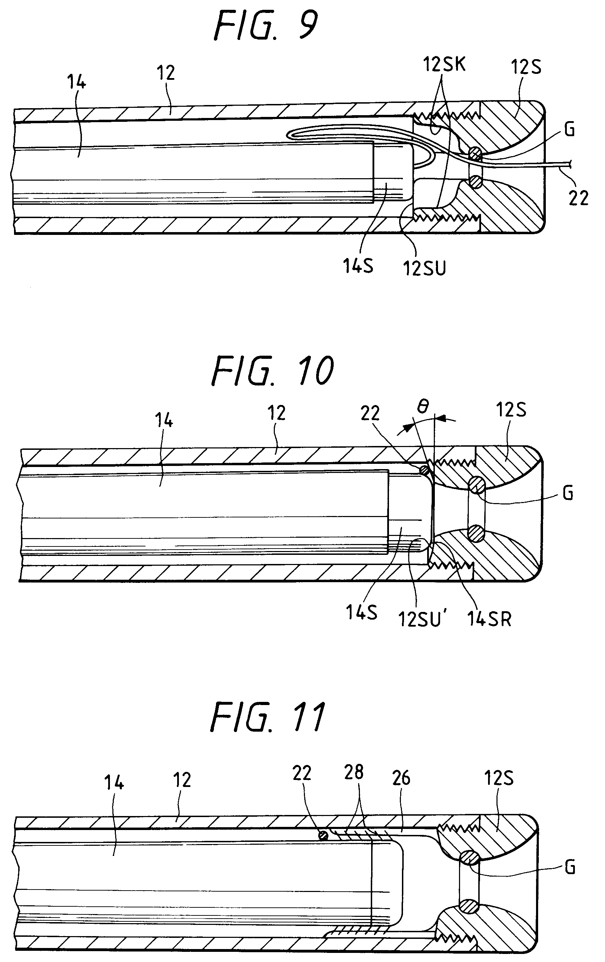

Fig. 8 shows a structure in which the shape of the outer surface 14ST of the plug 14S is tapered in such a manner that the size of the rear portion is reduced. As a result, entangled fishing line in this region can easily be unraveled by pulling the fishing line. The novel arrangement shown in Fig. 6 or Fig. 7 may be added to the above-mentioned tapered shape.

Fig. 9 shows the plug 12S of the first intermediate rod section 12 having a structure such that a front end surface 12SU receives the rear end surface of the plug 14S of the second intermediate rod section 14. Moreover, a clearance space section 12SK permitting the loosen fishing line 22 introduced into the inner surface portion of the first intermediate rod section to pass through is formed. In a plane view orthogonal to a longitudinal direction of the rod pipe, the area of the front end surface 12SU of the plug 12S may have a small area. That is, if the area of the clearance space section 12SK is enlarged as much as possible, an introduced fishing line can easily be pulled out by pulling the fishing line.

Fig. 10 shows a structure in which a front end surface 12SU' of the plug 12S of the first intermediate rod section 12 is inclined by an inclination angle θ of 5 degrees to 60 degrees whereas a rear end portion 14SR of the plug 14S of the second intermediate rod section 14 is formed into a curved shape. When the fishing line 22 introduced between the second intermediate rod section 14 and the first intermediate rod section 12 is pulled out, the fishing line is allowed to pass through the space between the rear end of the plug 14S and the front end surface 12SU' of the plug 12S. The resistance at this time can be reduced. It is preferable that the angle θ be 15 degrees to 45 degrees.

Fig. 11 shows a structure in which a plurality of members 26 for attaching a bendable, flexible member 28 are disposed apart from one another in the circumferential direction on the inner surface of the first intermediate rod section 12 in front of the plug 12S. The member 26 may be formed integrally with the plug 12S or individually from the same. The flexible member 28 is attached to be inclined toward the rear position, as illustrated. Since the plural flexible members 28 are disposed in the circumferential direction, the accommodated second intermediate rod section 14 is supported by the flexible members 28 at substantially the center of the first intermediate rod section 12. Therefore, a space through which the fishing line 22 can be allowed to pass through is uniformly formed between the first intermediate rod section and the second intermediate rod section 14. Thus, the introduced fishing line 22 can easily be pulled out. To prevent the flexible member 28 from hindering the operation, it is inclined rearwards. The flexible member 28 may be a flocked fabric, a whisker member or a thin plate.

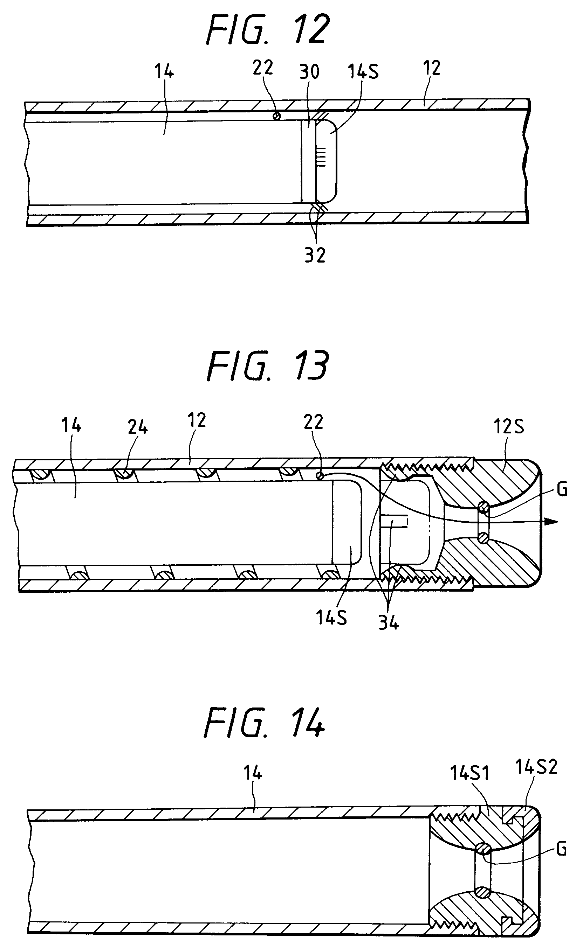

Fig. 12 shows a structure in which a band member 30 is attached around the plug 14S of the second intermediate rod section 14. Moreover, the flexible members similar to those shown in Fig. 11 are attached to plural positions on the circumference of the band member in such a manner that the flexible members 32 are inclined rearwards similarly to the foregoing flexible members. Therefore, the second intermediate rod section 14 is supported by the flexible members 32 at substantially the central position of the first intermediate rod 12. Thus, a space through which the introduced fishing line 22 is able to pass is uniformly maintained in the circumferential direction. As a result, the introduced fishing line 22 can easily be pulled out.

Fig. 13 shows a structure in which a plurality of projections 34 are, in the circumferential direction, dispersively disposed on the inner surface of the rod in front of the plug 12S of the first intermediate rod section 12. The projections 34 may be formed integrally with the plug or individually from the same. As indicated by a two-dotted chain line, the plural projections 34 are able to limit the second intermediate rod section 14 and its plug 14S to be positioned at substantially the central portion of the first intermediate rod 12. Since circumferential spaces are formed between the adjacent projections, the fishing line 22 introduced between the first intermediate rod section and the second intermediate rod section can easily be pulled out.

Fig. 14 shows a structure in which a rotative element 14S2 is attached to the rear end of the plug body 14S1 of the second intermediate rod section 14. The reason for this is that the tangled fishing line can easily be unraveled because of the rotation of the element 14S2. Therefore, it is preferable that a bearing be disposed to enable the element to be rotated smoothly. The element 14S2 may have wear resistance or may be made of a material enabling the fishing line to be slid satisfactorily or formed by a flexible member to protect the fishing line from being damaged even if the fishing line is held undesirably.

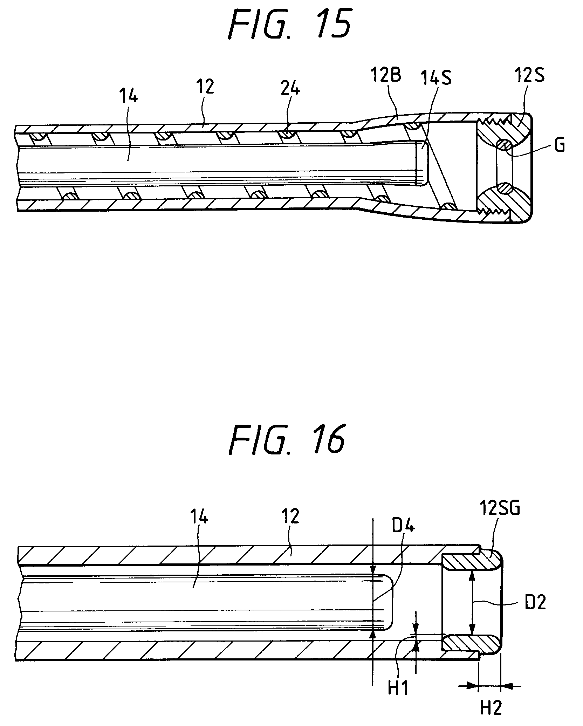

Fig. 15 shows a structure having an enlarged portion 12B formed by enlarging the rear end portion of the first intermediate rod section 12 provided with the spiral fishing-line guide 24. As a result, when the second intermediate rod section 14 is accommodated, a large clearance is formed between the foregoing rear end portion (a region adjacent to the plug 14S) and the first intermediate rod section 12. Therefore, the fishing line cannot easily be entangled around the-second intermediate rod section. Even if the fishing line is entangled, it can easily be unraveled.

Fig. 16 shows a structure in which a wear resisting and hard fishing line guide ring 12SG is directly secured to the rear end of the first intermediate rod section 12. The guide ring projects rearwards by only H2 and has a curved end. Also it projects inwards by only H1 over the inner surface of the first intermediate rod. The inner diameter D2 of the guide ring is larger than the outer diameter D4 of the second intermediate rod section 14 so that the second intermediate rod section 14 is removed from the rear portion. As a result, a simple and light weight structure having no plug can be realized. The fishing line guide ring 12SG may be made of a material enabling the fishing line to be slid satisfactorily or a flexible material as well as the wear resisting material. Thus, even if the fishing line is held, it can easily be removed. Moreover, the fishing line can be protected from being damaged.

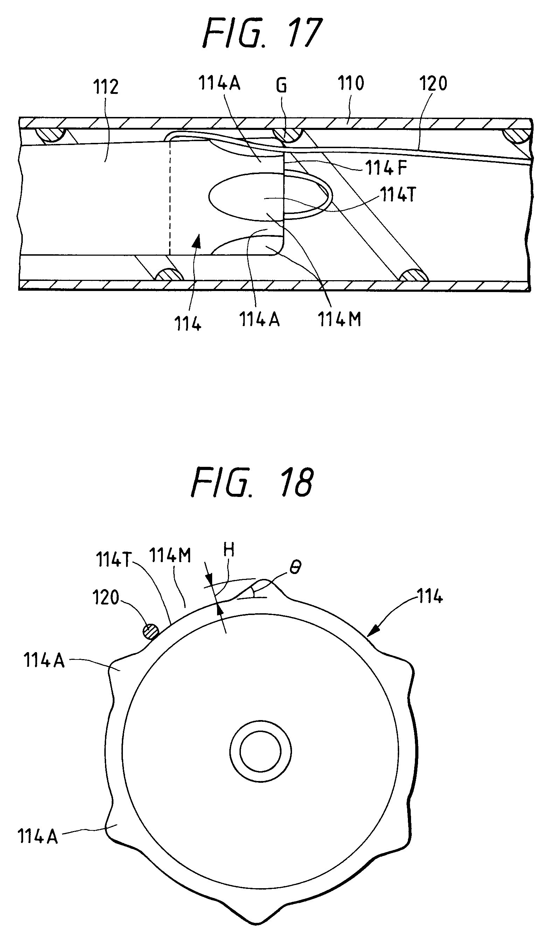

Fig. 17 is a vertical cross sectional view showing an essential portion of an interline fishing rod which constitutes another embodiment of the present invention. Fig. 18 is an enlarged view showing an end cap of a small-diameter rod pipe when it is viewed from a rear position. Spiral fishing line guides G are disposed on the inner surface of a large-diameter fishing rod section 110. An end cap 114 is threadingly and detachably attached to the rear end of a small-diameter fishing rod section 112 which is to be directly joined to the large-diameter rod section. Each rod section is made of fiber reinforced plastic containing resin, such as epoxy resin, as the matrix thereof and reinforced with fiber, such as carbon fiber.

The fishing line 120 loosen during the accommodation is sometimes introduced a space between the outer surface of the small-diameter rod section and the inner surface of the large-diameter rod section for some reason or other. If the small-diameter fishing rod section 112 is accommodated into the large-diameter fishing rod section 110 having the fishing line guides G in such a manner that the small-diameter fishing rod section 112 is dropped into the large-diameter fishing rod section 110 as in a case where the interline rod is oriented to make a great angle from the horizontal, the introduced fishing line 120 is held between the end cap 114 of the small-diameter rod section and the fishing line guide G of the large-diameter fishing rod section 110. Thus, the fishing line is struck by the peripheral portion of the end cap 114 of the small-diameter rod section and thus damaged. To prevent the damage, the following contrivance is employed in this embodiment.

A plurality of (six in this embodiment) axial grooves 114M are formed in the outer surface of the end cap 114 in a region from an intermediate position of the end cap in the lengthwise direction to the rear end. The groove has a bottom surface 114T. As shown in Fig. 18, wall portions 18a are formed in parallel to one another. The adjacent two wall portions 114A defines the groove 114M. Each of wall portions 114A has a horizontal cross sectional shape formed into a mountain-like (triangular) shape. The height H of each mountain-like wall portion 114 is made to be not smaller than the diameter of a standard fishing line 120 for use in the interline fishing rod. Moreover, the size of a portion between wall portions, that is, the width of the groove 114M is made to be not smaller than the diameter of the foregoing fishing line. As a result, the fishing line 120 can be introduced into the groove. The fact that the height and the width of the groove are not smaller than the diameter of the fishing line means a fact that a space capable of introducing the fishing line therein is provided.

The foregoing wall portion has a horizontal cross sectional shape formed into a mountain-like shape having an upper portion formed into a curved shape (which is a circular shape in this case). Since the width of the top end therefore is zero in the theoretical viewpoint, the fishing line is dropped into the groove 114M even if the fishing line 120 is attempted to be held between the top end of the wall portion 114A and the fishing line guide G of the large-diameter rod section. Therefore, the fishing line 120 cannot be damaged. If the inclination angle θ of the wall portion of the mountain-like portion is made to be 45 degrees or smaller, the end cap 114 can preferably be attached or detached to and from the small-diameter fishing rod section 112 without an ache of the finger.

The horizontal cross sectional shape of the wall portion is not limited to the mountain-like shape and it may be formed into a rectangular shape. If the width of the top portion is made to be not larger than the width of the standard fishing line, the fishing line is not held between the top portion and the fishing line guide G. Thus, damage of the fishing line can further effectively be prevented. When the end cap 114 is attached or detached to and from the small-diameter fishing rod section 112, the finger may sometimes ache. Therefore, it is preferable that the cross-sectional shape is formed into the mountain-like portion or a trapezoid shape. If the trapezoid shape is employed, it is preferable that the corners are rounded. Moreover, it is preferable that the width of the top portion be made to be not larger than the diameter of the standard fishing line. It is further preferable that two structures be employed.

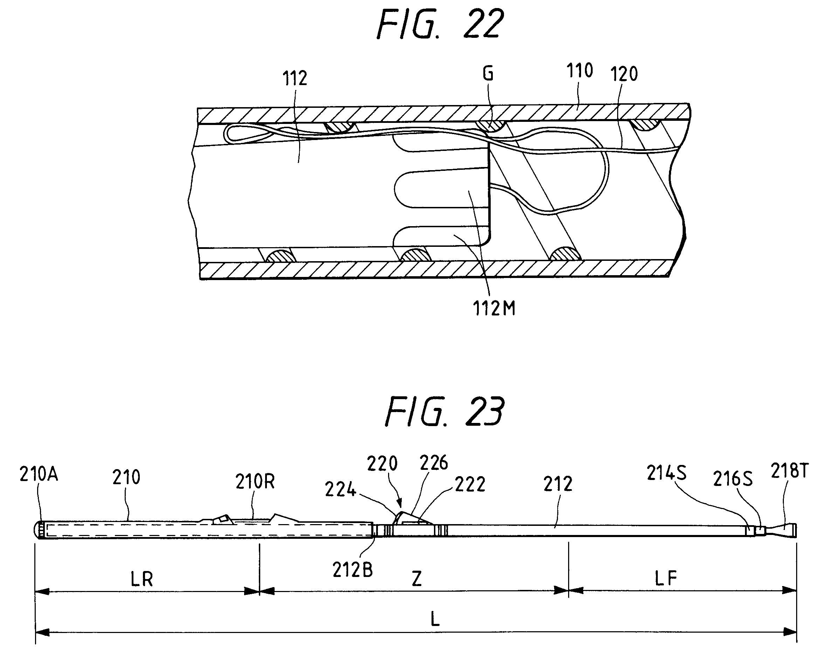

The fishing line guide G is not limited to the spiral shape and therefore it may be a plurality of annular fishing line guides. The end cap 114 at the rear end of the small-diameter fishing rod section 112 may be omitted. In this case, grooves similar to the foregoing grooves are required to be formed in the rear end portion of the small-diameter fishing rod section. The foregoing state is shown in Fig. 22. A plurality of grooves 112M similar to the grooves 114M of the end cap 114 are formed in the rear end portion of the small-diameter fishing rod section 112. Moreover, an opening or the like may be formed in the bottom surface 114T of the groove. In the foregoing embodiment, the front end portion of the groove 114M has the bottom surface 114T which is made to be high to reach the surface of the end cap 114. If the height of the bottom surface 114T is gradually made to be high as it extends forward, the fishing line is not held between the fishing line guide G in the above-mentioned portion. Thus, the fishing line is not damaged.

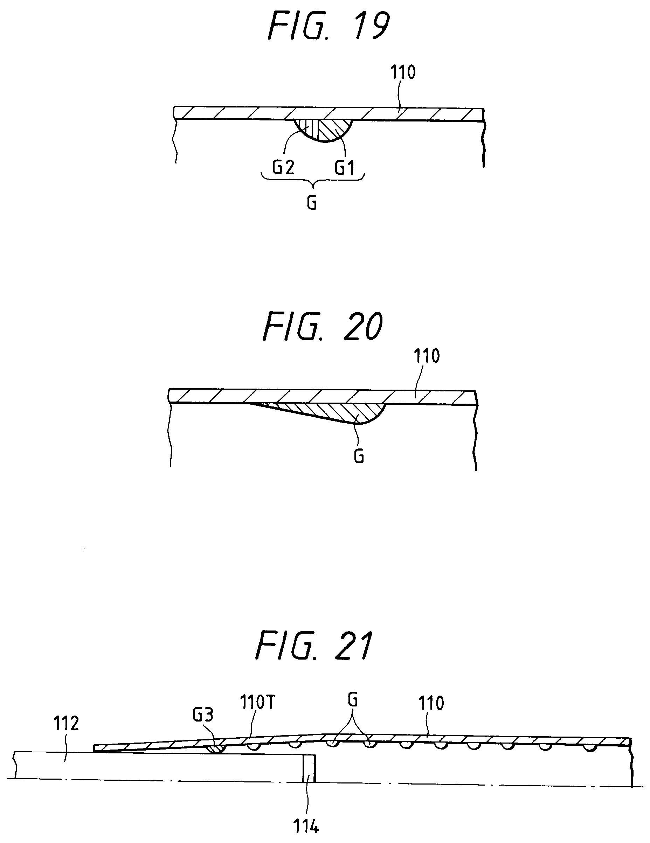

Fig. 19 shows a fishing line guide provided on the large-diameter rod section 110, which has a soft portion G2 having a cushioning characteristic and disposed in front of a hard body G1 of the fishing line guide G. As a result, even if the fishing line 120 is held between the rear end of the small-diameter rod section (or its end cap 114) moved rearwardly for accommodation and the fishing line guide G, the cushioning characteristic of the soft portion G2 is able to prevent the damage.

Fig. 20 shows the cross sectional shape of the fishing line guide G provided on the large-diameter fishing rod section 110 and moderately inclined in the forward direction as compared with the rear portion, as illustrated. As a result, even if the fishing line 120 is attempted to be held between the rear end of the small-diameter fishing rod section 112 (or its end cap 114) moved rearwardly for accommodation and the fishing line guide G, the fishing line can be moved along the moderately inclined surface rearwardly to escape from the fishing line guide. Thus, damage can be prevented.

Fig. 21 shows a front portion 110T of the large-diameter fishing rod section 110 which is enlarged in the rearward direction. Therefore, a large space can easily be formed between the outer surface of the rear end portion of the small-diameter fishing rod section 112 (or its end cap 114), which is accommodated, and the fishing line guide of the large-diameter fishing rod section 110. Therefore, the fishing line can easily be protected from being damaged. Moreover, the front portion 110T of the large-diameter fishing rod section 110 is structured such that a strong annular fishing line guide G3 having wear resistance superior to that of the spiral fishing line guide G situated in the rear of fishing line guide G3 is disposed in front of the spiral fishing line guide G. Thus, the small-diameter fishing rod section 112 is accommodated in such a manner that it is brought into contact with and guided by the foregoing annular fishing line guide G3. As a result, a space can easily be formed between the spiral fishing line guide G in the rear of the fishing line guide G3 and the small-diameter rod section. Thus, the fishing line can easily be protected from being damaged.

Although the rear fishing line guide G is formed into the spiral shape and the front fishing line guide G3 is formed into the annular shape, the shapes are not limited to the foregoing description, that is, the type of the fishing line guide is not limited.

Moreover, a flexible member made of, for example, rubber, may be disposed at the rear end (at the rear end of the end cap 114 if the end cap 114 is provided) of the small-diameter fishing rod section 112. Thus, if the fishing line is held between the flexible member and the fishing line guide G of the large-diameter fishing rod 110, damage can be prevented because of a similar reason to that described with reference to Fig. 19. The shape of the flexible member may be an annular shape, and the flexible member may cover the overall rear end or partially cover the rear end.

Fig. 23 shows an interline fishing rod which constitute another embodiment of the present invention. A reel fixing portion 210R for fixing a reel is provided on a major rod section 210. An end cap 210A is threadingly attached to the rear end of the major rod section 210. A first intermediate rod section 212 can be telescopically accommodated in the major rod section 210 so that the rear end thereof reaches a position near the rear end of the major rod section. The length of the first intermediate rod section 12 is considerably longer than the length of the major rod section 210. The accommodated state is as shown in Fig. 23. The first intermediate rod section 212 is provided with a fishing-line introducing section 220 and is allowed to project over the major rod section 210 in the accommodated state. The fishing-line introducing section 220 has a hard guide ring 222 that has an elongated hole and that is attached to an elongated hole formed in the first intermediate rod section 212. The hard guide ring 222 is made of ceramics or the like. The fishing-line introducing section 220 further has a bridge-like metal frame 226 disposed to cover the upper portion of the guide ring 222; and another hard guide ring 224 attached to the rear portion of the frame and made of ceramics or the like. The guide ring 224 is disposed at a position higher than the outer surface of the leading end of the major rod section. Thus, when fishing is performed in a state where the first intermediate rod section 212 has been accommodated in the major rod section 210 and the length has been shortened, the resistance caused due to the contact of the fishing line with the leading end of the major rod section can be reduced.

A second intermediate rod section is telescopically accommodated in the first intermediate rod section 212, a third intermediate rod section is telescopically accommodated in the second intermediate rod section, and a tip rod section is telescopically accommodated in the third intermediate rod section. A support portion 214S is threadingly attached to the leading end of the second intermediate rod section, a support portion 216S is threadingly attached to the leading end of the third intermediate rod section and a top guide 218T is threadingly attached to the tip rod section. With the aid of the support portions, each of the fishing rod sections, to be accommodated, is engaged to the leading end of each accommodating rod section and allowed to project from the leading end of each accommodating rod section. Therefore, the desired fishing rod section can be easily be introduced into and discharged from the accommodating rod section by holding the same by the fingers. The first intermediate rod section 212 is provided with a holding portion 212B at a position behind the fishing-line introducing section 220. The holding portion 212B is engageable with the leading end of the major rod section 210 so that the accommodate state is maintained. Moreover, the rear end of the first intermediate rod section 212 may also be engaged to the rear end of the major rod section so as to prevent any looseness (clattering) and facilitate the operation for inserting the fishing line.

In the accommodated state, the fishing-line introducing section 220 is disposed in an intermediate region Z except for regions LF and LR which are the front and rear portions each having a length of about 30 % with respect to the overall length L of the fishing rod. As a result, the longitudinal balance of the fishing rod can be maintained when the operation for inserting the fishing line is carried out with the fishing-line introducing section be held with one angler's hand. Thus, this arrangement facilitates the insertion operation. The overall length L is about 130 cm or shorter, preferably 125 cm or shorter and most preferably 120 cm or shorter. Since the accommodation overall length L is 130 cm or shorter, the second intermediate rod section or the like can be moved to a position at which the rear end of the second intermediate rod section or the like is located near the fishing-line introducing section 220, such that the leading ends 214S, 216S and 218T of the second intermediate rod section or the like accommodated in the first intermediate rod section 212 are held by the hand in a state where the portion in the vicinity of the fishing-line introducing section 220 is held by the other hand. Therefore, a preparation for the fishing-line insertion operation can be easily and immediately set without the necessity of changing the hands grasping the interline rod.

Since the fishing-line introducing section 220 is structured so that the inside portion of the rod can be viewed through the introducing section 220, by moving the hand holding the portion adjacent the fishing-line introducing section to approach the eyes and by viewing the inside of the rod through an elongated hole of the guide ring 222 of the fishing-line introducing section 220, the angler can visually check the state as to how degree the second intermediate rod or the like is pulled out. Thus, the preparation for the fishing-line insertion operation can further easily and accurately be performed.

If the other rod sections are arranged to be accommodated to a position near the rear end of the major rod section 210 similarly to the first intermediate rod section 212, the entire length (pulled-out length) of the fishing rod can be increased without increasing the number of rod sections. If the number of the rod sections is made small, the inner diameter of each rod section can be enlarged and thus the resistance of the fishing line can therefore be reduced. Since the number of joints can be reduced in this case, the flexibility or bending characteristic of the overall fishing rod can easily be set.

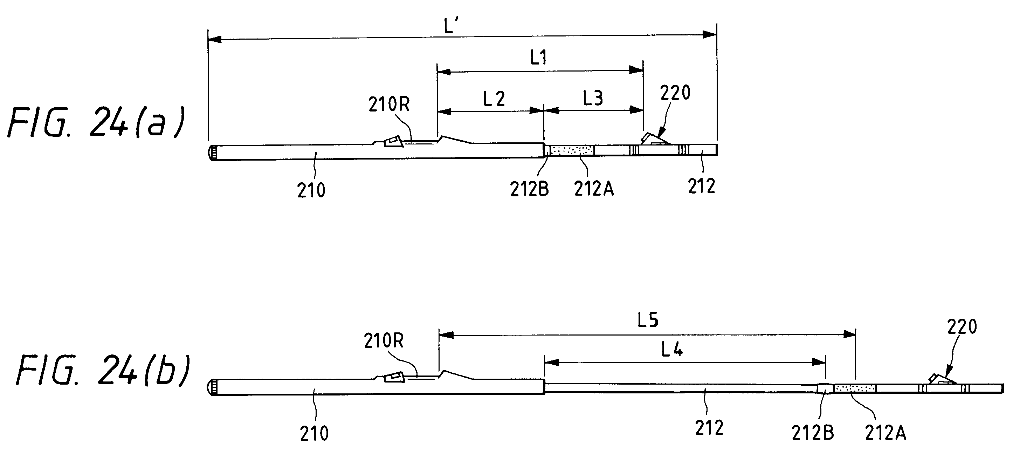

Figs. 24(a) and 24(b) shows an interline fishing rod which constitutes another embodiment of the present invention. Fig. 24(a) is a diagram showing a state where the first intermediate rod section 212 has been accommodated similarly to Fig. 23 and Fig. 24(b) is a diagram showing a state where the rod section has been pulled out. Similarly to Fig. 23, a reel fixing portion 210R is provided for the major rod section 210, and the first intermediate rod section 212 is provided with the fishing-line introducing section 220. A grip portion 212A is formed in front of the holding portion 212B. The grip portion 212A is located in front of the front end of the major rod section in a case where the first intermediate rod section 212 has been accommodated. The tip rod section and the other rod sections are omitted from illustration. The grip portion may be formed by printing, such as screen printing, a non-slip coating, or in the form of a grip member or a simple mark. Since the grip portion 212A is formed in front of the holding portion 212B, the hand holding the grip portion is not caught in the front end portion of the major rod section 210 when the first intermediate rod section 212 is accommodated, so that an injury is prevented.
(1) In a case where fishing is performed in a state where the first intermediate rod section 212 has been accommodated as shown in Fig. 24(a) in accordance with the fishing spot condition, it is preferable that the length L1 from the reel fixing portion 210R to the fishing-line introducing section 220 be longer because the angle of introduction of the fishing line can be reduced and thus the resistance of the fishing line can be reduced. However, the length L1 has a limitation because the state is the accommodation state. Thus, the length is set to be the predetermined length. The length L1 is the sum of the distance L2 from the reel fixing portion 210R to the front end of the major rod section 210 and the distance L3 from the front end of the major rod section to the fishing-line introducing section 220. It is preferable that L2 is set to be shorter than L3, more preferably not longer than 1/2.
   The reason for this will now be described. If the first intermediate rod section 212 is required to be pulled out in accordance with the fishing condition, for instance in a case where the terminal fish hook device is caught during fishing in the state shown in Fig. 24(a), the hand holding the reel fixing portion of the major rod section is kept intact and the grip portion 212A of the first intermediate rod section in the region in front of the front end of the major rod section is held by the other hand to pull out the first intermediate rod section, and it that state, the rod section is pulled out to increase the length of the fishing rod. Since the span of the arms of the angler is constant, the rod section can be pulled out by longer distance L4 as the distance L2 from the reel fixing portion 210R to the front end of the major rod section 210 is shorter. Thus, the degree of freedom of pulling out can be extended.
(2) It is preferable that distance L5 from the reel fixing portion 210R to the grip portion 212A in the state where the fishing rod has been pulled out be 130 cm or shorter in consideration of the span of the two arms of the angler, more preferably 125 cm or shorter and most preferably 120 cm or shorter. If the length is longer than the above-mentioned value, it is inconvenient because the hand must be changed to pull out the rod section and the rod section cannot be pulled out at one stretch.
   The distance from the reel fixing portion 210R to the fishing-line introducing section 220 in a state where the fishing rod has been extended is L1 + L4. Thus, the angle of introduction of the fishing line can furthermore be reduced. As a result, the resistance of the fishing line can be reduced.
(3) When the first intermediate rod section 212 is pulled from the major rod section 210, the unit is made to be a multiple, such as in units of 30 cm, in units of 50 cm or the like to enable the fishing rod to be extended by an appropriate length. However, the structure is not limited to this.
(4) If the length of the major rod section 210 with respect to length L' realized when the first intermediate rod section 212 is accommodated in the major rod section 210 is set to be 55 % to 70 %, it is possible to facilitate the pull-out and accommodation operation for length adjustment in a state where the reel fixing portion 210R is held during fishing. In a case where the fishing operation is started after the length has been adjusted depending on the fishing spot condition, the length is set to be 65 % to 85 % to improve the deflection characteristic and the accommodation efficiency.

The foregoing contrivances (1) to (4) may be employed solely or their combination may be employed.

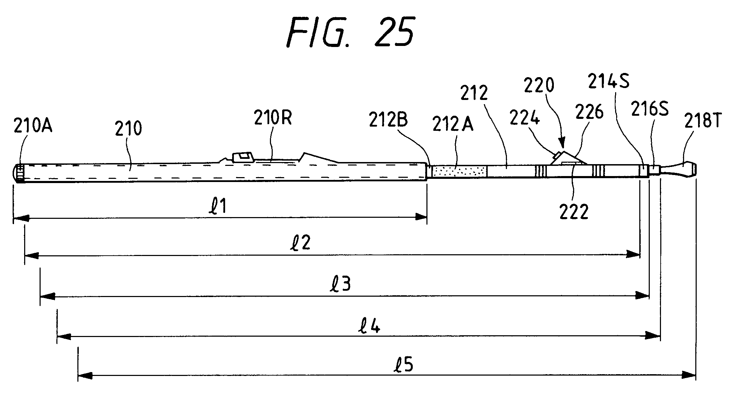

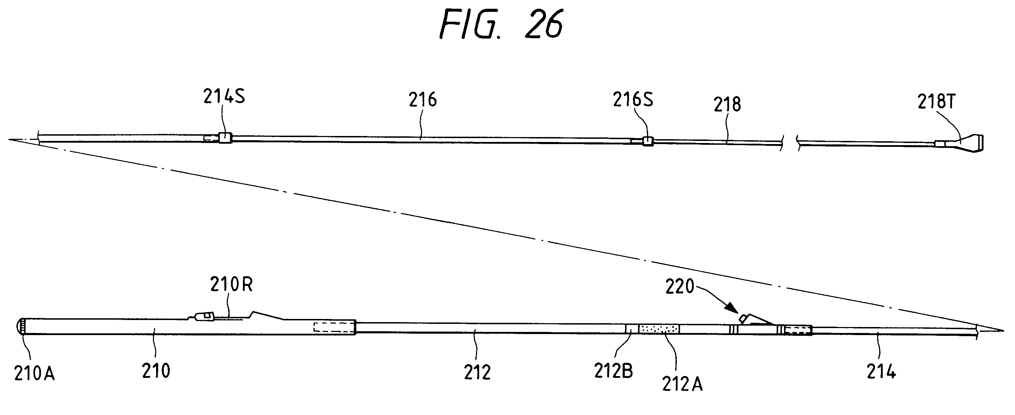

Fig. 25 shows a structure in which the first intermediate rod section 212 having the fishing-line introducing section 220, similarly to the structures shown in Figs. 23, 24(a) and 24(b), has a considerably long length with respect to the major rod section 210 having the reel fixing portion 210R as described in (4). Moreover, the first intermediate rod section 212 is accommodated in such a manner that its rear end substantially reaches the end cap 210A threadingly and detachably attached to the major rod 210. The holding portion 212B is provided on the first intermediate rod section to be engaged with the inside portion of the leading end of the major rod section 210 to maintain the above-mentioned state of accommodation. In front of the holding portion 212B, the grip portion 212A similar to that shown in Figs. 24(a) and 24(b) is formed. Fig. 26 shows a state where the fishing rod has been pulled out fully.

The second intermediate rod section 214 has length 213 and is accommodated in such a manner that its rear end substantially reaches a plug (not shown) which is provided on the rear end portion of the first intermediate rod section 212, and through which the fishing line is passed. A support portion 214S in the leading end portion of the second intermediate rod section 214 is engaged with the leading end of the first intermediate rod section 212 so as to project therefrom. Similarly, the third intermediate rod section 216 has length 214 and is accommodated in such a manner that its rear end substantially reaches a plug (not shown) which is provided on the rear end portion of the second intermediate rod section 214 and which is designed to permit a fishing line to pass through the plug. A support portion 216S in the leading end portion of the second intermediate rod section 216 is engaged with the leading end of the second intermediate rod section 214 and allowed to project therefrom. Similarly, the tip rod section 218 has length 215 and is accommodated in such a manner that its rear end substantially reaches a plug (not shown) which is provided on the rear end portion of the third intermediate rod section 216 and which is designed to permit a fishing line to pass through the plug. A top guide 18T in the leading end portion of the tip rod section 18 is engaged with the leading end of the third intermediate rod section 216 and allowed to project therefrom.

As described above, each rod is, by the top guide or the support portion, supported in a neck handing state so that the rods are accommodated such that their rear ends are not in contact with the rear end portion. However, the rods may be accommodated in such a manner that their rear ends are in contact with the rear end portions.

When the structure is formed in such a manner that the each rod section is accommodated to a position near the rear end of the corresponding accommodating rod section, and the relationship of their lengths is established such that the leading ends of the accommodated rods project from the front ends of the accommodating rods, the length of the accommodated fishing rod can be shortened though a considerably long length of the pulled-out fishing rod is realized. If the entire fishing rod length is the same, the number of rod sections to be joined together can be reduced (the number of joints can be reduced). Thus, the inner diameter of each rod section can be set at a large value, and thus the resistance of the fishing line inserted into the rod sections can be reduced. Since the joints which generally has the increased rigidity can be reduced, the flexibility or bending characteristic of the rod can easily be set.

To enable the rod to be disassembled by pulling, the top guide and the holding portions are formed into detachable structures. Moreover, the end cap and the plugs are formed into detachable structures.

The fishing-line introducing section 220 is formed similar to that shown in Fig. 23. The metal frame 226 in the form of the bridge and the hard guide ring 224 attached to the rear portion of the frame and made of ceramics may be omitted. If they are provided, it is preferable that the guide ring 224 is disposed at a position higher than the surface of the first intermediate rod section to prevent contact of the fishing line with the surface of the first intermediate rod section. In a case where the first intermediate rod section 212 is accommodated in the major rod section so that the fishing-line introducing section 220 is positioned near the leading end of the major rod section as similarly to a case shown in Fig. 223, it is preferable that the guide ring 224 is disposed at a position higher than the outer surface of the leading end of the major rod section. If the fishing-line introducing section 220 is positioned near the leading end of the major rod section as similarly to the case shown in Fig. 23, it is preferable that the grip portion 212A shown in Fig. 25 is disposed in front of the fishing-line introducing section 220 to prevent contact of the fishing line with the holding hand when fishing is performed in a state where the rod sections are accommodated and thus the length is short.

Fig. 27 shows an interline fishing rod which constitute another embodiment of the present invention. A first intermediate rod section 312, which is the small-diameter rod, is connected to a major rod section 310, which is the large-diameter rod, a second intermediate rod section 314 is connected to the first intermediate rod section, and a tip rod section 316 is connected to the second intermediate rod section 314 in the telescopic manner. A top guide 18 is attached to the leading end of the tip rod section, a reel fixing unit 320 for receiving and securing a reel 322 is provided on the major rod section 310, and a fishing-line introducing section 324 for introducing a fishing line pulled out from the reel 322 into the inside portion of the rod is provided in front of the reel fixing unit 320 and at a position near the front portion of the major rod section. Reference numeral 326 represents an end plug threadingly and detachably supported in place.

The rear ends of the rod sections 312, 314 and 316 respectively have annular and detachable plugs 312S, 314S and 316S having inner surfaces to which the annular fishing line guides are attached. Moreover, spiral fishing line guides 312G, 314G and 316G are respectively disposed in the rod sections 312, 314 and 316 at positions in front of the corresponding plugs. In this embodiment, the fishing line guides have substantially the same heights, but the angle of inclination of the cross sectional shape of the fishing line guide of the tip rod 316 is different from those of the fishing line guides in the other rod sections. That is, inclination angle θ made between the rear surface of the fishing line guide 316G and the inner surface of the rod section is smaller than the angle of inclination of the fishing line guides of the other rod sections. Moreover, inclination angle θ made between the rear surface of the fishing line guide 316G and the inner surface of the rod section is smaller than the angle of rearward inclination made between the front surface of the fishing line guide 316G and the inner surface of the rod section.

The annular fishing line guides 312KG, 314KG and 316KG on the inner surface of the rod sections are structured to have the inner diameters in the descending order. The inner diameters may be inverted or the inner diameters may be the same. In this embodiment, one fishing line guide is provided on each plug, but a plurality of fishing line guide may be provided on each plug. A conical guide portion 312K arranged to receive the rear end of the plug 314S of the second intermediate rod section 314 to position it at the center and formed to be narrowed in the rearward direction is disposed in front of the plug 312S of the first intermediate rod section 312. Moreover, a conical guide portion 314K arranged to receive the rear end of the plug 316S of the tip rod section 316 to position it at the center and formed to be narrowed in the rearward direction is disposed in front of the plug 314S of the second intermediate rod section 314. Therefore, the centers of the first, second and third intermediate rod sections and the tip rod section substantially coincide with one another. Since the first intermediate rod section 312 is formed into the telescopic structure with respect to the major rod section 310, its rear end can be positioned near the fishing-line introducing section 324. In this state, that is, in a state shown in Fig. 28, a fishing-line introducing tool (not shown) is inserted from the fishing-line introducing section 324 through the plugs 312S, 314S and 316S and the annular fishing line guides 312KG, 314KG and 316KG so that the fishing line introducing tool is introduced into the rear end of the tip rod section. That is, the fishing line introducing tool can be easily introduced into the rear end of the tip rod section without passing fishing line guides other than the fishing line guides 312KG, 314KG and 316KG provided on the plugs as the rearmost annular fishing line guides of respective rod sections 312, 314 and 316.

Since the cross sectional shape of the spiral fishing line guide 316G in the tip rod section 316 is, as described above, further inclined forwards as compared with the other spiral fishing line guides, the fishing line introducing tool is not easily caught when it is inserted into the tip rod section and thus the fishing line introducing tool can smoothly be inserted. Note that the fishing line guide of the top guide 318 is not always furthermore inclined forwards. All of the spiral fishing line guides 316G are not always furthermore inclined forwards. That is, some exceptions are permitted.

Since the fishing line guides are, in this embodiment, provided for all of the rod sections 312, 314 and 16 following the small-diameter rod section in front of the major rod section 310 having the fishing-line introducing section 324, the fishing line can satisfactorily be guided when fishing is performed.

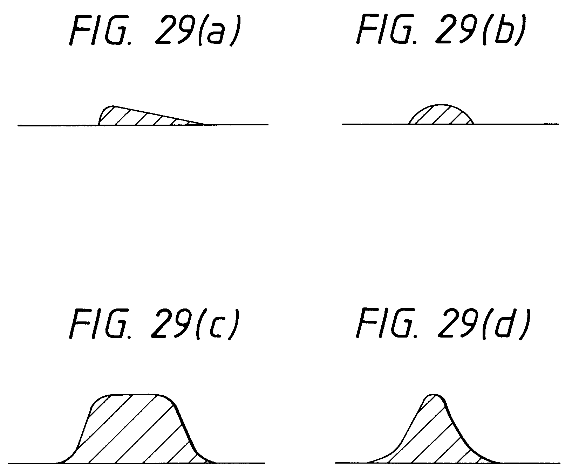

It is preferable that the cross sectional shape of the fishing line guide in the tip rod section 316 is made to be as shown in Fig. 29(a) or 29(b). It is preferable that the cross sectional shape of the fishing line guide in each of the first intermediate rod section 312 and the second intermediate rod section 314 is as shown in Fig. 29(c) or Fig. 29(d). In Fig. 29(a), the left-hand portion of the drawing may be the front portion of the rod section and, or otherwise, may be the rear portion of the rod section. The rear surface or the front surface of the fishing line guide is inclined forwards or rearwards as compared with those of the other rod sections. Thus, the fishing line can easily be inserted. If the left-hand portion of the drawing is the front portion, the resistance generated when the fishing line is played out can be reduced. If the front or rear inclination angle is made to be moderate as shown in Fig. 29(b) as compared with that shown in Fig. 29(c) or Fig. 29(d), the fishing line can easily be inserted from the rear portion of the rod section or the leading end of the same. Moreover, the resistance generated when the fishing line is played out can be reduced.

Since the fishing line is not required to directly be inserted into the first intermediate rod section and the second intermediate rod section when the fishing line is inserted in the state shown in Fig. 28, the front inclination angles of the fishing line guides on the intermediate rod sections 312 and 314 are not required to be reduced. Therefore, the cross sectional shape having a large inclination angle, such as the trapezoidal shape shown in Fig. 29(c) or the triangular shape shown in Fig. 29(d) may be employed. Owing to this, if the heights are the same, enlargement of the weight attributable to the fishing line guide can be prevented. Since prevention of wetting of the fishing line with water drops introduced into the rod greatly contributes to the reduction in the resistance of the fishing line during fishing, it is preferable that the fishing line guides on the first intermediate rod section and the second intermediate rod section in which the heights of the fishing line guides can be enlarged are made to be enlarged as compared with those in the tip rod section. Since the tip rod section is deflected or bent considerably as compared with the other rod sections, it is preferable that the width and the height of the fishing line guide in the tip rod section are smaller that those in the other rod sections from a viewpoint of the bending characteristic. Since the tip rod section is greatly deflected or bent as compared with the other rod sections, the pitch of the fishing line guides is made to be shorter than that of the fishing line guides in the other rod sections to make the fishing line to be difficult to come in contact with the inner surface of the rod section to satisfactorily reduce the resistance of the fishing line. In the structure shown in Fig. 28, a shorter pitch is employed as the rod diameter becomes smaller. To determine the shape of the fishing line guide, the relationship among the angle of inclination, height, width and the pitch may be combined arbitrarily.

The specific height of the fishing line guide in the tip rod section is made to be 0.2 mm or shorter. The leading end portion of the tip rod section is provided with the fishing line guide and it may be omitted from the butt end portion adjacent to the major rod section. In this case, the other rod sections 312 and 314 are provided with fishing line guides each having a height of 0.2 mm or shorter. When the fishing line guide has a mirror surface, water cannot easily be formed into a water drop in general. Therefore, the resistance of the fishing line can be reduced. Although the structure is employed in which both of the first and second intermediate rod sections are provided with the fishing line guides, a structure may be employed in which only one rod is provided with the fishing line guides.

Although the structure is employed in which the tip rod section is provided with the fishing line guides, they may be omitted. In this case, the fishing line can furthermore easily be inserted. If the first and second intermediate rod sections on which large force acts when a fish has been caught are provided with the fishing line guides, the resistance of the fishing line can be reduced. In this case, reduction in the resistance of the fishing line is not hindered even if the fishing line guide is omitted from the tip rod section.

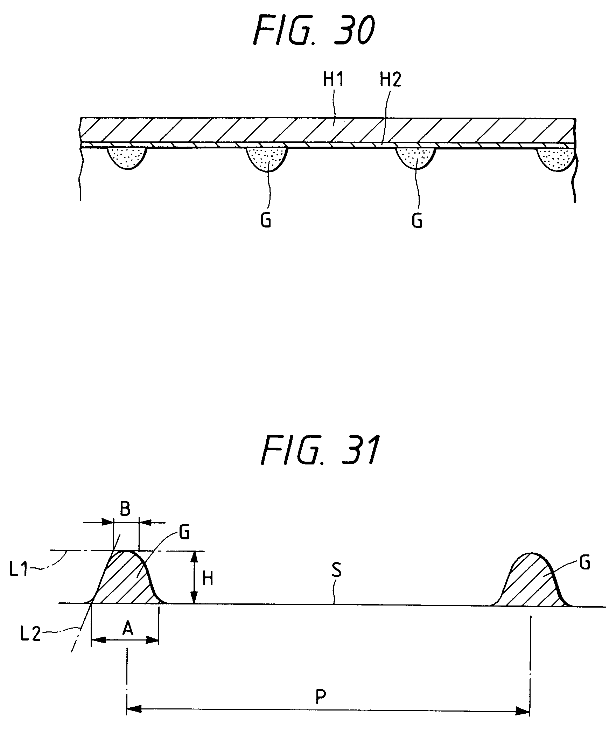

Fig. 30 shows a structure for preventing deterioration in the durability attributable to degradation of the fishing line guide occurring due to heat which is generated due to contact and frictional resistance between the played-out or wound-up fishing line and the fishing line guide G. That is, a layer H2 having thermal conductivity superior to that of a rod body layer H1 is formed on the inner surface of the rod body layer H1 containing synthetic resin as the matrix thereof and reinforced with reinforcing fiber. Similarly, the fishing line guide G is also formed of or covered with material having the superior thermal conductivity. Thus, heat generated in the top portion of the fishing line guide can be dispersed in the lengthwise direction of the rod section through the body of the fishing line guide and the layer H2. Thus, the fishing line guide can be protected from heat and the durability can be improved. Specifically, metal particles are mixed with the layer H2 and the inside portion of the fishing line guide or metal lines, very thin plate members or films having excellent heat conductive are disposed in the lengthwise direction of the layer H2. It is preferable that the heat dispersing structure is formed such that the fishing line guides are disposed on the inner surface of the layer H2, as illustrated.

Fig. 31 shows the shape of the fishing line guide G. The fishing line guide G may be used as the fishing line guide on the first intermediate rod section or the second intermediate rod section shown in Fig. 28. The foregoing fishing line guide may be used as the fishing line guide on the tip rod section 316. The top portion of the fishing line guide G is formed into a curved shape projecting outwards. Moreover, distance B between intersections of tangent L1 drawn in parallel to the lengthwise direction of the rod section and lines L2 prolongated from the two inclined surfaces of the fishing line guide is made to be not larger than 1/2 of distance A between intersections of the foregoing lines L2 and bottom surface S of the rod section. Height H is made to be not smaller than two times the distance A. Moreover, the distance B is made to be not larger than 1/10 of pitch P. The distance B is considered as the length of contact for the fishing line guide with the fishing line. Since the length of contact is P in a case where no fishing line guide is provided, existence of the fishing line guide G makes the length of contact with the fishing line to be 1/10 or less. Therefore, the resistance of the fishing line can significantly be reduced.

In the embodiment shown in Fig. 28, it is preferable that the fishing line guides in the first and second intermediate rod sections have the height larger than that of the fishing line guide in the tip rod section to reduce the resistance of the fishing line. Since the small-diameter rod generally has a smaller inner diameter as compared with the large-diameter rod, the height of the fishing line guide in the small-diameter rods may be larger than the height of the fishing line guides in the large-diameter rod to prevent contact of the inserted fishing line attributable to swinging with the wall surface in the rod. From the same viewpoint, the ratio of the height of the fishing line guide in the small-diameter rods with respect to the inner diameter of the rod is required to be 1.5 times or larger or two times or larger that in the large-diameter rod.

## Claims

1. An interline fishing rod having at least first and second rod sections, said first rod section being adapted to be accommodated in said second rod section in a telescopic manner, said interline fishing rod characterized by comprising:
a stopper, provided on said first rod section, for limiting a relative position between said first and second rod sections when said first rod section is accommodated in said second rod section, to thereby define a clearance space between a rear end of said first rod section and a rear end of said second rod section.

2. An interline fishing rod according to claim 1, characterized in that first and second plugs each having a guide ring are respectively attached to rear ends of said first and second rod sections, and said clearance space is defined between a rear end of said first plug and a front end of said second plug.

3. An interline fishing rod according to claim 1 or 2, wherein said clearance space has a longitudinal length of 10 mm or longer.

4. An interline fishing rod according to any one of claims 1 to 3, characterized in that said stopper is provided on a front end of said first rod section, said stopper being engageable with a front end of said second rod section.

5. An interline fishing rod according to any one of claims 1 to 4, characterized in that said stopper is detachably mounted on said first rod section.

6. An interline fishing rod having at least first and second rod sections, said first rod section being adapted to be accommodated in said second rod section in a telescopic manner, said second rod section having at least one fishing line guide projected inwardly from an inner circumferential surface of said second rod section, said interline fishing rod characterized in that:
a plurality of grooves are formed in a rear end portion of said first rod section, each of said groove extending substantially in a lengthwise direction of said first rod section up to a rear lengthwise terminus of said first rod section; and
each of said grooves has a depth and a width, each of which is larger than a diameter of a standard fishing line.

7. An interline fishing rod according to claim 6, characterized in that adjacent two grooves are partitioned by a wall portion, a width of said wall portion at a crest thereof is smaller than said diameter of said standard fishing line.

8. An interline fishing rod according to claim 6 or 7, characterized in that a plug is detachably attached to said rear end of said first rod section, said plug defines said plurality of grooves.

9. An interline fishing rod having at least first and second rod sections, said first rod section being longer in length than said second rod section and having an fishing line introducing section, said second rod section having a reel fixing portion, said interline fishing rod characterized in that:
said first rod section is adapted to be partially accommodated in said second rod section so that a rear end of said first rod section is located near a rear end of said second rod section and that said fishing line introducing section is located outside said second rod section, to thereby establish an accommodated state of said fishing rod;
an entire length of said fishing rod in said accommodated state can be reduced to be about 130 cm or less; and
said fishing line introducing section is located in an intermediate region determined by excluding about 30% of the entire length from each of front and rear portions of said fishing rod, when the entire length of said fishing rod in said accommodated state has been reduced to be about 130 cm or less.

10. An interline fishing rod according to claim 9, characterized in that a length between said reel fixing portion and a front end of said second rod section is shorter than a length between said front end of said second rod section and said fishing line introducing section in said accommodates state of said fishing rod.

11. An interline fishing rod having at least first and second rod sections, said first rod section being longer in length than said second rod section and having an fishing line introducing section, said second rod section having a reel fixing portion, said interline fishing rod characterized in that:
said first rod section is adapted to be partially accommodated in said first rod section so that a rear end of said first rod section is located near a rear end of said second rod section and that said fishing line introducing section is located outside said second rod section, to thereby establish an accommodated state of said fishing rod; and
a length between said reel fixing portion and a front end of said second rod section is shorter than a length between said front end of said second rod section and said fishing line introducing section in said accommodates state of said fishing rod.

12. An interline fishing rod having a large-diameter rod section and a rod section group connected to said large rod section, said large-diameter rod section having a fishing line introducing portion, said rod section group having a tip rod section and at least one small-diameter rod section for connecting said tip rod section to said large-diameter rod section, characterized in that:
each of rod sections included in said rod section group is connected to adjacent rearward one of rod sections included in said rod section group in a telescopic manner so that said each of rod sections can be accommodated in said adjacent rearward one of rod sections;
said each of rod sections included in said rod section group has a plug at its rear end, said plug being provided with a fishing line guide as a rearmost fishing line guide of said each of rod sections included in said rod section group;
when said each of rod sections has been accommodated in said adjacent rearward one of rod sections, no fishing line guide is longitudinally interposed between said rearmost fishing line guide of said each of rod sections and said rearmost fishing line guide of said adjacent rearward one of rod sections; and
said rearmost fishing line guide of one of rod sections, which one is directly connectable to said large-diameter rod section, can be disposed in the vicinity of said fishing line introducing portion.

13. An interline fishing rod according to claim 12, characterized in that:
said at least one small-diameter rod section includes a rod section having at least one fishing line guide provided on an inner circumferential surface thereof, said at least one fishing line guide defining a plurality of inwardly projected portions projected from said inner circumferential surface and arranged at a first interval in a longitudinal direction in cross-sectional view;
said tip rod section having at least one fishing line guide provided on an inner circumferential surface thereof, said at least one fishing line guide defining a plurality of inwardly projected portions projected from said inner circumferential surface and arranged at a second interval in a longitudinal direction in cross-sectional view; and
each of said inwardly projected portions in said rod section included in said at least one small-diameter rod section is different in shape from each of said inwardly projected portions in said tip rod section.

14. An interline fishing rod according to claim 13, characterized in that:
at least either a forwardly inclined angle of a rear surface of each of said inwardly projected portions in said tip rod section or a rearwardly inclined angle of a front surface of each of said inwardly projected portions in said tip rod section is smaller than an inclined angle of a surface of each of said inwardly projected portions in said rod section included in said at least one small-diameter rod section.

15. An interline fishing rod according to claim 13 or 14, characterized in that said first interval is larger than said second interval.
